# EUROPEAN PATENT SPECIFICATION

(11) **EP 3 557 016 B1**
(45) Date of publication and mention of the grant of the patent: **28.10.2020**
(21) Application number: 19170412.1
(22) Date of filing: 19.04.2019
(51) Int. Cl.: F02B 37/10, F02B 39/10, F02D 41/04, F02M 26/05, F01N 3/20, F01N 3/22, F01N 3/28, F01N 3/30, F01N 3/32, F01N 5/04, F01N 9/00, F01N 11/00, F02D 41/00

(54) **METHOD AND SYSTEM FOR MANAGING AN ACTIVE SCR (SELECTIVE CATALYTIC REDUCTION) OF AN ATS (AFTER-TREATMENT SYSTEM)**
VERFAHREN UND SYSTEM ZUR VERWALTUNG EINER AKTIVEN SCR (SELEKTIVEN KATALYTISCHEN REDUKTION) EINES ATS (NACHBEHANDLUNGSSYSTEMS)
PROCÉDÉ ET SYSTÈME DE GESTION DE SCR (RÉDUCTION CATALYTIQUE SÉLECTIVE) ACTIVE D'UN SPT (SYSTÈME DE POST-TRAITEMENT)

(30) Priority: 19.04.2018 IT 201800004725
(43) Date of publication of application: 23.10.2019
(73) Proprietor: FPT Motorenforschung AG, 9320 Arbon (CH)
(72) Inventor: COCOCCETTA, Fabio, 8006 ZURICH (CH); TSINOGLOU, Dimitrios, 9008 ST. GALLEN (CH)
(74) Representative: Bongiovanni, Simone

(56) References cited:
- EP-A1- 2 256 311
- EP-A1- 2 754 871
- DE-A1-102017 122 892
- FR-A1- 2 981 983
- US-A1- 2013 312 407
- US-B2- 8 800 272
- US-B2- 9 512 764

## Description

### Cross-reference to related applications

This patent application claims priority from italian patent application no. 102018000004725 filed on 19/04/2018.

### Field of the invention

The present invention relates to a method and system for managing an active SCR of an ATS, in particular in the field of heavy vehicles.

### Description of the prior art

Internal combustion engine, especially, Diesel type implement active SCR to neutralize NOx produced by the respective internal combustion engines.

The SCR are defined as "active" when the NH3 herein stored is used to neutralize NOx. Said NH3 is generated by thermolysis and subsequent hydrolysis of a liquid reducing agent, which is injected in the exhaust stream by means of a suitable dosing module

In the present description with SCR is meant an "active SCR".

At cold start, the main problem of such ATS is the great difficulty to thermolyze and subsequently hydrolyze the liquid reducing agent, in order to supply the ATS with NH3, because the heat content of the exhaust gas produced by the internal combustion engine is insufficient to heat the masses of the components defining the ATS and the latent heat of the liquid reducing agent.

In spite of the inefficient hydrolyzation of the reducing agent, which leads to solid deposits in the dosing module, the SCR is in its best operating conditions.

Indeed the SCR storage capacity decreases with its temperature raising.

In addition, the NH3 storage of the SCR is usually limited, by a safety coefficient, in order to prevent NH3 slip during a sudden acceleration. Indeed, also the NH3 slip falls within the concept of engine emissions, thus it should be limited as much as possible.

The safety coefficient defines reduction values as function of the temperature, such that a limiting curve is substantially similar to and spaced from a rated storage curve expressing the storage capacity as function of the temperature.

The emission regulations are becoming stringent also with respect to cold start conditions. Therefore, main trend of the manufacturers is the implementation of NSC or PNA devices capable to store NOx as long as the active SCR reached its light off temperature.

However, NSC and PNA are unable to achieve high durability, in contrast with regulations. The following publications disclose methods for managing active SCR facing engine cold start: EP 2 256 311 A1, EP 2 754 871 A1, US 9 512 764 B2 or US 2013/312407 A1.

### Summary of the invention

The main object of the present invention to provide a method for managing an active SCR in order to face engine cold start without the implementation of additional NOx storage devices, such as NSC or PNA.

The main principle of the invention is to increase the NH3 storage when an engine shut off command is detected, such that, said increased NH3 storage is ready for a subsequent engine cold start.

In order to increase NH3 storage, the above mentioned limiting curve of the NH3 storage is modified.

According to an implementation which is not part of the invention, and which does not involve an architectural variation of the ATS layout, when said shut off command is detected, the engine shut-off is postponed and the engine speed is controlled irrespective of the accelerator pedal position, while the reducing agent dosing module injects reducing agent. Once the NH3 storage increase is ended, the engine and the dosing module are shut-off.

This embodiment is preferably implemented when the vehicle is provided of automatic or assisted gear change, thus neutral or park condition is turned and parking brakes are activated automatically. When, instead, the vehicle is provided with a manual gear change, the procedure is carried out when the gear change is detected in neutral and the parking brake is detected as activated.

Advantageously, the internal combustion engine is maintained on in order to produce a hot gas flow required to hydrolyze the reducing agent.

According to an embodiment of the invention, which does not involve a variation of the ATS layout, the air circulation through the ATS is realized with engine off, through an electric turbine or an electric turbocharger and high pressure EGR means kept fully open during air blowing, while the dosing module is active.

According to another embodiment of the invention, which involves a variation of the ATS layout, the ATS is provided of recirculation means, and when a shut off command is detected, the internal combustion engine is immediately shut-off and then the recirculation means including a pipe and a blower is activated to circulate air through the ATS partly of completely, while the dosing module is active, so that the SCR NH3 storage is increased while internal combustion engine is off.

It is clear that if not all the ATS components are involved in the air recirculation, at least the SCR with its dosing module must be included in the loop.

The NH3 stored in the SCR at the end of a hot mission depends mainly on the average SCR temperature before and at the time of the engine shut off. Too high SCR temperature could not allow a sufficient NH3 storage to tackle NOx emissions when a next cold cycle has to be performed.

Therefore, the NH3 storage increase can be postponed to the time in which the ATS temperature is in a predetermined temperature window. Alternatively, the blower and the reducing agent dosing module are activated before, the ATS temperature falls within said temperature window in order to take advantage of the better conditions to hydrolyze the reducing agent.

Advantageously, the reducing agent is evaporated by extracting the residual heat from the ATS, resulting in a high partial pressure of NH3 entering the SCR, with an optimal adsorption.

Preferably, the SCR is arranged to be always crossed by exhaust gasses produced by the internal combustion engine. This means that the SCR is preferably arranged on the exhaust line and not on a bypass or means that the ATS does not include bypass means for selectively bypass the SCR alone.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows a first embodiment of the invention implemented without changing a traditional ATS layout including an SCR,
- Fig. 2 shows a first embodiment of the invention which implement a slight ATS layout variation,
- Fig. 3 shows a second embodiment of the invention implemented through recirculation means arranged on the ATS,
- Fig. 4 shows a third embodiment of the invention implemented through recirculation means arranged on the ATS;
- Fig. 5 shows a diagram disclosing the ACR storage curves: a rated curve (without fired engine) and a limited curve to avoid NH3 slip during engine acceleration.

The same reference numerals and letters in the figures designate the same or functionally equivalent parts.

According to the present invention, the term "second element" does not imply the presence of a "first element", first, second, etc.. are used only as labels for improving the clarity of the description and they should not be interpreted in a limiting way, unless specifically described in the following description.

### Detailed description of the preferred embodiments

Example embodiments are provided so that this disclosure will be thorough, and will fully convey the scope to those who are skilled in the art.

Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure as defined by the claims. In some example embodiments, well known processes, well-known device structures, and well known technologies are not described in detail.

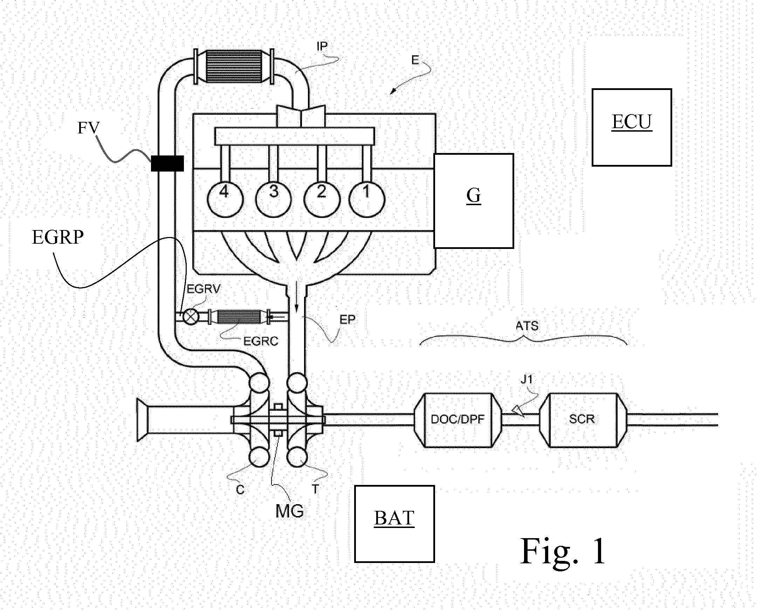

Figure 1 - 4 disclose an internal combustion engine E provided with an intake line IP and an exhaust line EP. The engine can develop any cycle and can encompass any number of cylinders, for example four 1 - 4. To the exhaust line an ATS is operatively connected.

A control unit ECU (engine control unit) is implemented to control fuel injection in the at least one engine cylinder. In addition, several sensors, including temperature sensors and NH3 and/or NOx sensors are implemented along with the ATS.

Usually at least one NOx sensor, and sometimes also a NH3 sensor are arranged downstream the SCR such that said control unit ECU is programmed to control the dosing module on the basis of the signals received by said NH3 and/or NOx sensors.

As disclosed in the figures 1 - 4, the ATS further comprises a DOC (Diesel Oxidation catalyst) and a particulate trap (DPF), arranged in this order upstream of the SCR. However, the ATS can change.

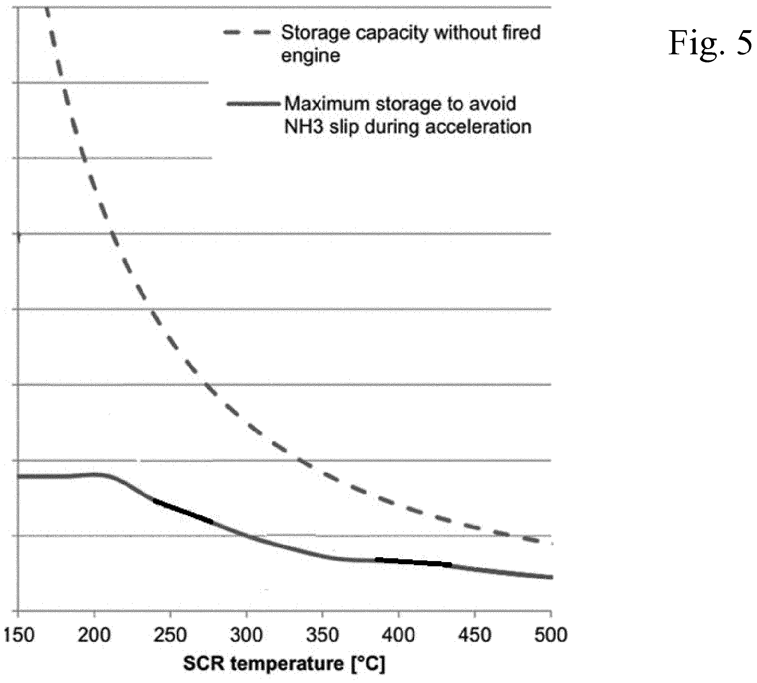

Figure 5 shows the SCR storage capacity as a function of temperature of the SCR itself.

Two storage curves are indicated:
- The rated storage capacity with engine off;
- The limited storage capacity in order to avoid NH3 slip during engine acceleration (when engine is on).

During NH3 enrichment the storage can be increased to approach the rated storage curve and even the rated curve itself can be used as target storage.

With reference to figure 1, without changing the ATS layout and irrespective of the presence of a supercharger and of EGR means, when a shut-off command is detected (i), the engine is kept on (!ii), the dosing module is kept active (iiia) with a modified SCR target storage in order to achieve an NH3 enrichment for the SCR.

When the internal combustion engine is paired with an automatic gear change, the shut-off command moves the gear change into neutral or parking condition (!iia), by disconnecting the engine crankshaft from the vehicle transmission, thus, the engine can be easily kept active.

Preferably, any engine speed control is superseded (!iib) by the present control in order to use the engine as a gas blower to hydrolyze the reducing agent injected by the dosing module J1 of the SCR.

When, instead the gear change is manual it is essential to check if the gear change is in neutral (!iic) and if the parking brake is activated (!iid).

Sometimes the park brake is electric, thus, it is sufficient to check whether the gear change is in neutral, and in positive case parking brake is automatically activated (!iie). Then the above steps
- engine kept on (!ii), and
- dosing module kept active (iiia) with a modified SCR target storage,
are carried out, otherwise the engine is stop without performing the above NH3 enrichment for the SCR.

According to another implementation of the invention based on figure 1, the engine E is provided with an electric compressor C arranged on the intake line IP to supercharge the internal combustion engine.

In addition, the internal combustion engine E comprises high pressure EGR means to circulate exhaust gas from the exhaust line to the intake line in a point downstream of the compressor according to a fresh air circulation.

EGR means include a pipe EGRP and a metering valve EGRV. Often also a cooler EGRC is arranged on the EGR pipe.

Alternatively, instead of the electric compressor an E-turbocharger can be implemented.

An E-turbocharger is a known turbocompressor T, C paired with an electric machine MG working as motor or generator according to specific engine operating conditions.

The electric machine MG, supplied by a vehicular battery BAT, is arranged to drive the electric compressor or the turbo-charger T, C.

It should be understood that the turbine is only optional and if back pressure is needed, for example to recirculate exhaust gasses while the engine is fired, a throttling valve can be implemented downstream of the inlet of the EGR pipe.

According to a similar embodiment only an electric power turbine T, of a turbocompound configuration, is arranged on the exhaust line such that EGR pipe inlet is arranged between the exhaust manifold and the power turbine.

When a shut-off command is detected (i), the engine is shut-off (ii), the dosing module is kept active or is activated (iiia) with a modified SCR target storage in order to achieve an NH3 enrichment for the SCR and the EGR means are kept open (iiib) and the electric compressor or the E-turbocharger or the electric power turbine is activated (iiic).

Thus, fresh air is sucked by the compressor and diverted towards the ATS, bypassing the internal combustion engine E, through the EGR means.

This layout is deemed to be the best implementation of the present invention, because the EGR cooler EGRC usually arranged on the EGR pipe EGRP is a heat exchanger based on the engine water. Therefore, during the NH3 enrichment procedure, even if the engine is off, its heat capacity is exploited to pre-heat fresh air entering in the intake line.

Such heat is then useful in the subsequent reducing agent thermolysis procedure at the SCR dosing module.

Therefore, on the basis of figure 1 three independent embodiments can be developed, one based on an electric compressor, one on an electric power turbine, and one on e-turbocharger.

Figure 1 discloses also a throttling valve FV arranged on in intake line IP of the internal combustion engine. Such valve is usually implemented to throttle intake at cold start in order to increase pumping losses and shift the engine point so as to achieve a faster engine/ATS heating.

Such valve is preferably throttled in order to bypass completely the engine during SCR NH3 enrichment.

Nevertheless, other solutions can be implemented, for example, the cylinder valves can be provided with variable valve actuation suitable to block airflow circulation through engine cylinders valves.

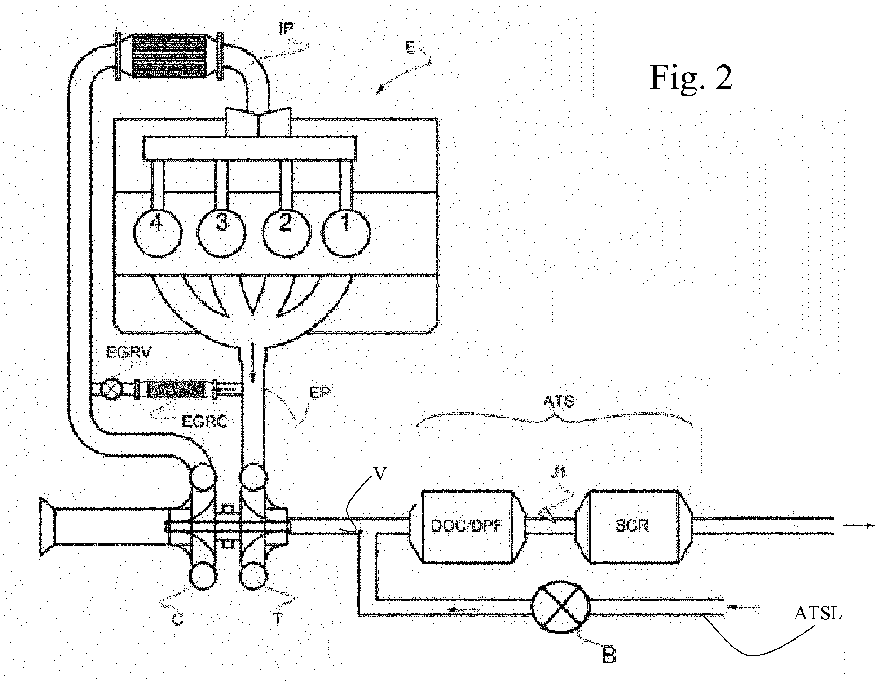

Figure 2 discloses another embodiment of the invention, where, irrespective of the presence of supercharger C or a turbo-supercharger T, C, the ATS is provided of branch pipe with a blower B arranged thereon. The blower defines a circulation orientation and the outlet of the branch pipe is connected to the exhaust line upstream of at least the SCR. A valve V is arranged at the connection point of the branch pipe to connect selectively the exhaust manifold or the blower to the ATS.

When the engine is off, the valve is arranged to connect the blower the ATS, at lease to the SCR, such that fresh air is pumped though the SCR while its dosing modules injects reducing agent. This procedure causes NH3 storage increase, ready for a subsequent engine cold start.

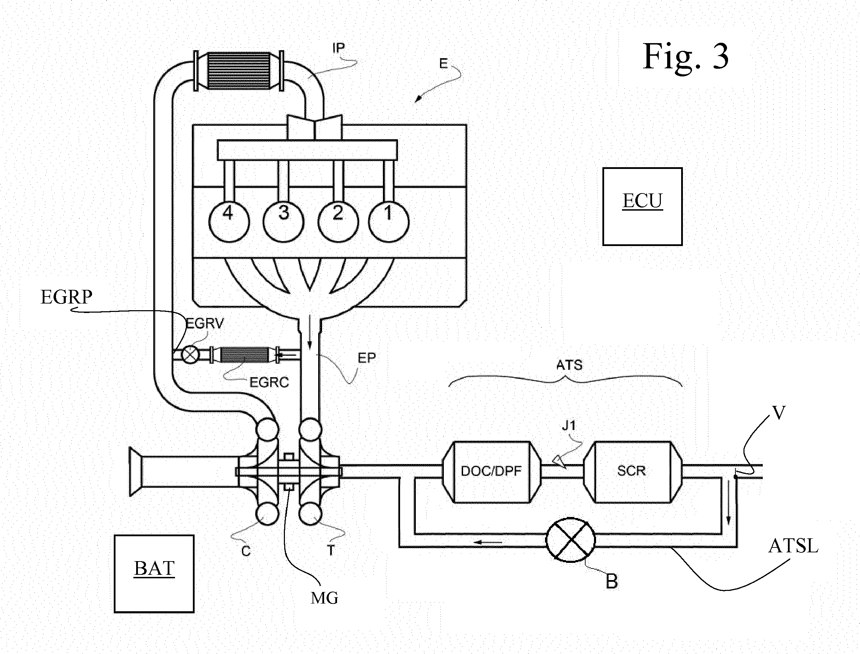

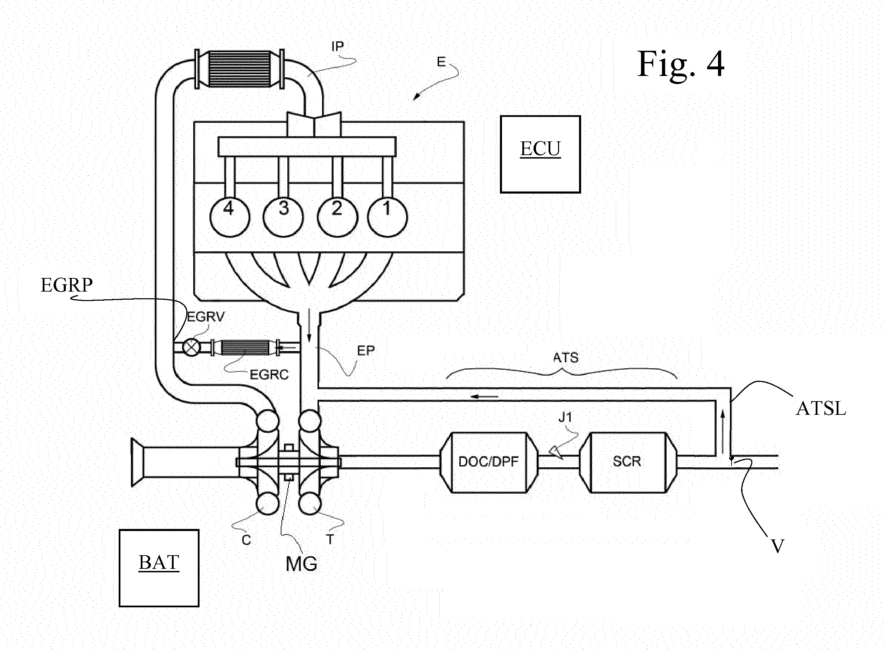

The steps sequence, needed to control the NH3 enrichment is similar to the sequence described below, in relation to the embodiments of figure 3 and 4.

Figure 3 discloses another embodiment of the invention, where, irrespective of the presence of supercharger C or a turbo-supercharger T, C, the ATS is provided of recirculation pipe ATSL connecting two points of the exhaust line, one first point upstream and one second point downstream of the SCR. In this way, a loop is defined. A diverting valve V is arranged at said second point.

In case the internal combustion engine E is provided of a turbine T, of a turbocharger or of a turbocompound, the above first point is arranged downstream the turbine such that the turbine is excluded from the loop.

When the engine is on, the diverting valve V is arranged to block the circulation pipe ATSL and permitting exhaust gas to flow in the environment after ATS crossing. When an enrichment procedure is carried out, the diverting valve V switches (x) to isolate the ATS from the environment and defining a loop including at least the SCR.

An electric blower B is arranged on the circulation pipe ATSL.

According to this embodiment of the invention, when a shut-off command is detected (i), the engine is shutoff (ii), the dosing module is kept active (iiia) with a modified SCR target storage in order to achieve an NH3 enrichment for the SCR and the blower is activated (iiic).

With reference to figure 4 another implementation of the invention is disclosed. In this embodiment the electric blower is replaced by ab E-turbocharger driven by an electric machine MG. Here the above first point of the circulation pipe ATSL is arranged upstream of the turbine, in order to include the turbine in the loop. Indeed, here, the air circulation is carried out through the turbine instead of the (independent) electric blower.

Also in this case a diverting valve V is arranged in the second connection point. The control scheme to carry out the NH3 enrichment of the SCR is identical to the previous one according to figure 3.

For both the last two embodiment of figure 3 and 4, it is preferred to include in the loop also the NOx or NH3 sensor arranged downstream of the SCR, in order to better control the reducing agent control during the NH3 enrichment.

For any of the previous embodiments, it is preferably carried out a continuous control of the NH3 enrichment based on the ATS temperature to interrupt or inhibit the procedure when the residual heat is not enough to provide for the hydrolyzation heating.

For the second embodiment based on figure 3, the temperature control can consider also the engine water temperature to decide the NH3 enrichment interruption.

In parallel with the above controls, of course, the reducing agent metering is carried out until the NH3 storage target is not reached.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Method for managing an active selective catalytical reduction SCR of an after-treatment system ATS, wherein the ATS is connected to an exhaust manifold (EP) of an internal combustion engine (E), the method comprising the step of increasing an NH3 storage (iii) when an engine shut off command is detected (i), such that said increased NH3 storage is ready for a subsequent engine cold start; the method further comprising an engine shut off, when said shut off command is detected; **characterized in that**, when the engine is shut off, a reducing agent dosing module is activated or kept active so as to reach a target of said NH3 storage.

2. Method according to claim 1, wherein said SCR NH3 storage is limited before said shut off command detection with respect to a rated NH3 storage in order to avoid NH3 slip during an engine acceleration, and wherein said NH3 storage increase uses as target a modified NH3 storage higher than said limited storage and lower/equal said rated storage.

3. Method according to claim 1 or 2, wherein said internal combustion engine is provided with an electric compressor (C) arranged on an intake line (IP) of the internal combustion engine, to supercharge the latter, high pressure EGR means, suitable to circulate exhaust gas, when the engine is fired, from the exhaust line to the intake line, having an inlet arranged between said compressor and the engine intake, the method comprising, after the engine shut-off:
- dosing module controlled according to said target
- opening (iiib) of said EGR means
- activation (iiic) of said electric compressor in order to circulate fresh air from the intake line to the ATS, bypassing said internal combustion engine.

4. Method according to claim 3, wherein said compressor (C) is mechanically connected with a turbine (T) arranged on said exhaust line (EP), downstream of said EGR means and upstream of said ATS and wherein said electric compressor and said turbine define an electric turbocharger.

5. Method according to claim 1 or 2, wherein said internal combustion engine is provided with an electric power turbine arranged on the exhaust line (EP) of the internal combustion engine, to extract electric energy form the exhaust gases, high pressure EGR means, suitable to circulate exhaust gas, when the engine is fired, from the exhaust line to the intake line, having an inlet arranged between said engine exhaust manifold and said power turbine, the method comprising, after the engine shut-off:
- dosing module controlled according to said target
- opening (iiib) of said EGR means
- activation (iiic) of said electric power turbine in order to circulate fresh air from the intake line to the ATS, bypassing said internal combustion engine.

6. Method according to claim 1 or 2, wherein said ATS is provided of
- a circulation pipe (ATSL) connecting one first point upstream and one second point downstream of said SCR,
- a diverting valve (V) arranged at said second point suitable to define a closed loop at least including said SCR,
- electric blower (B) arranged on the circulation pipe (ATSL),
the method comprising controlling said diverting valve to block said circulation pipe (ATSL) before the detection of said shut off command and, when said shut off command is detected (i), comprising
- engine shutoff (ii),
- switching (iiid) said diverting valve to define said closed loop,
- dosing module controlled according to said target,
- activation (iiic) of said blower.

7. Method according to claim 1 or 2, wherein said internal combustion engine comprises a turbine (T), operatively connected with an electric motor (MG), arranged on said exhaust line between said internal combustion engine and said ATS and wherein the ATS is provided of
- a circulation pipe (ATSL) connecting one first point between said internal combustion engine and said turbine and a second point downstream of said SCR,
- a diverting valve (V) arranged at said second point suitable to define a closed loop at least including said SCR and said turbine,
the method comprising controlling said diverting valve to block said circulation pipe (ATSL) before the detection of said shut off command and, when said shut off command is detected (i), comprising
- engine shut-off (ii),
- switching (iiid) said diverting valve to define said closed loop,
- dosing module controlled according to said target and
- activation (iiic) of said turbine.

8. Method according to claim 1 or 2, wherein said internal combustion engine comprises
- a branch pipe (ATSL) having a first end opening in the ambient air and a second end connected to the exhaust manifold, upstream al least of said SCR and
- a blower (B) arranged on said branch pipe,
- a diverting valve (V) arranged at said second end,
the method comprising controlling said diverting valve to block said branch pipe (ATSL) before the detection of said shut off command and, when said shut off command is detected (i), comprising
- engine shut-off (ii),
- switching (iiid) said diverting valve to connect said branch pipe with said exhaust manifold,
- dosing module controlled according to said target and
- activation (iiic) of said blower.

9. Method according to any one of the previous claims, comprising continuously monitoring of an ATS temperature to interrupt or inhibit the above NH3 storage increase procedure when a residual ATS heat is not enough to provide for an urea agent hydrolyzation heating.

10. Method according to claim 9, when depending from anyone of claims 3 to 5, wherein also the engine water temperature is monitored continuously to interrupt or inhibit the above NH3 storage increase.

11. Internal combustion engine comprising an exhaust manifold and an ATS (After-treatment system) connected to said exhaust manifold, wherein the ATS comprises a SCR (Selective Catalytic reduction) and a control unit arranged to control an SCR NH3 storage, wherein said control unit is programmed to execute the method of any one of previous claims 1 - 10.

12. Vehicle provided with an internal combustion engine according to claim 11.

## Patentansprüche

1. Verfahren zum Managen einer aktiven selektiven katalytischen Reduktion SCR eines Nachbehandlungssystems ATS, wobei das ATS mit einem Abgaskrümmer (EP) einer Brennkraftmaschine (E) verbunden ist, wobei das Verfahren den Schritt des Erhöhens einer NH3-Speicherung (iii), wenn ein Kraftmaschinen-Abschaltbefehl detektiert wird (i), so dass die erhöhte NH3-Speicherung für einen nachfolgenden Kraftmaschinenkaltstart bereit ist, umfasst; wobei das Verfahren ferner eine Kraftmaschinenabschaltung umfasst, wenn der Abschaltbefehl detektiert wird; **dadurch gekennzeichnet, dass** ein Reduktionsmittel-Dosiermodul aktiviert wird oder aktiv gehalten wird, um ein Ziel der NH3-Speicherung zu erreichen, wenn die Kraftmaschine abgeschaltet wird.

2. Verfahren nach Anspruch 1, wobei die SCR-NH3-Speicherung vor der Abschaltbefehlsdetektion in Bezug auf eine Nenn-NH3-Speicherung begrenzt wird, um einen NH3-Schlupf während einer Kraftmaschinenbeschleunigung zu vermeiden, und wobei die NH3-Speicherungszunahme als Ziel eine geänderte NH3-Speicherung verwendet, die höher als die begrenzte Speicherung und niedriger oder gleich der Nennspeicherung ist.

3. Verfahren nach Anspruch 1 oder 2, wobei die Brennkraftmaschine mit einem elektrischen Kompressor (C), der an einer Eintrittsleitung (IP) der Brennkraftmaschine angeordnet ist, um die Letztere aufzuladen, mit einem Hochdruck-AGR-Mittel, das geeignet ist, Abgas von der Auslassleitung zu der Eintrittsleitung umzuwälzen, wenn die Kraftmaschine gezündet wird, wobei ein Einlass zwischen dem Kompressor und dem Kraftmaschineneintritt angeordnet ist, versehen ist, wobei das Verfahren nach dem Kraftmaschinenabschalten Folgendes umfasst:
- Steuern des Dosiermoduls gemäß dem Ziel,
- Öffnen (iiib) des AGR-Mittels,
- Aktivieren (iiic) des elektrischen Kompressors,
um Frischluft von der Eintrittsleitung zu dem ATS umzuwälzen, wobei die Brennkraftmaschine umgangen wird.

4. Verfahren nach Anspruch 3, wobei der Kompressor (C) mit einer Turbine (T), die an der Auslassleitung (EP), auslassseitig des AGR-Mittels und einlassseitig des ATS angeordnet ist, mechanisch verbunden ist und wobei der elektrische Kompressor und die Turbine einen elektrischen Turbolader definieren.

5. Verfahren nach Anspruch 1 oder 2, wobei die Brennkraftmaschine mit einer Elektroenergieturbine, die an der Abgasleitung (EP) der Brennkraftmaschine angeordnet ist, um von den Abgasen Elektroenergie zu extrahieren, mit einem Hochdruck-AGR-Mittel, das geeignet ist, Abgas von der Auslassleitung zu der Eintrittsleitung umzuwälzen, wenn die Kraftmaschine gezündet wird, wobei ein Einlass zwischen dem Kraftmaschinenabgaskrümmer und der Leistungsturbine angeordnet ist, versehen ist, wobei das Verfahren nach dem Kraftmaschinenabschalten Folgendes umfasst:
- Steuern des Dosiermoduls gemäß dem Ziel,
- Öffnen (iiib) des AGR-Mittels,
- Aktivieren (iiic) der Elektroenergieturbine,
um Frischluft von der Eintrittsleitung zu dem ATS umzuwälzen, wobei die Brennkraftmaschine umgangen wird.

6. Verfahren nach Anspruch 1 oder 2, wobei das ATS versehen ist mit:
- einem Umwälzrohr (ATSL), das einen ersten Punkt einlassseitig und einen zweiten Punkt auslassseitig der SCR verbindet,
- einem Umschaltventil (V), das an dem zweiten Punkt angeordnet ist, das geeignet ist, einen geschlossenen Kreislauf zu definieren, der wenigstens die SCR enthält, und
- einem elektrischen Gebläse (B), das an dem Umwälzrohr (ATSL) angeordnet ist,
wobei das Verfahren das Steuern des Umschaltventils zum Sperren des Umwälzrohrs (ATSL) vor der Detektion des Abschaltbefehls umfasst und dann, wenn der Abschaltbefehl (i) detektiert wird, Folgendes umfasst:
- Abschalten (ii) der Kraftmaschine,
- Schalten (iiid) des Umschaltventils, um den geschlossenen Kreislauf zu definieren,
- Steuern des Dosiermoduls gemäß dem Ziel,
- Aktivieren (iiic) des Gebläses.

7. Verfahren nach Anspruch 1 oder 2, wobei die Brennkraftmaschine eine Turbine (T) umfasst, die mit einem Elektromotor (MG), der an der Abgasleitung zwischen der Brennkraftmaschine und dem ATS angeordnet ist, funktional verbunden ist, und wobei das ATS versehen ist mit:
- einem Umwälzrohr (ATSL), das einen ersten Punkt zwischen der Brennkraftmaschine und der Turbine und einen zweiten Punkt auslassseitig der SCR verbindet, und
- einem Umschaltventil (V), das an dem zweiten Punkt angeordnet ist, das geeignet ist, einen geschlossenen Kreislauf zu definieren, der wenigstens die SCR und die Turbine enthält,
wobei das Verfahren das Steuern des Umschaltventils zum Sperren des Umwälzrohrs (ATSL) vor der Detektion des Abschaltbefehls umfasst und dann, wenn der Abschaltbefehl detektiert wird (i), Folgendes umfasst:
- Abschalten (ii) der Kraftmaschine,
- Schalten (iiid) des Umschaltventils, um den geschlossenen Kreislauf zu definieren,
- Steuern des Dosiermoduls gemäß dem Ziel und
- Aktivieren (iiic) der Turbine.

8. Verfahren nach Anspruch 1 oder 2, wobei die Brennkraftmaschine Folgendes umfasst:
- ein Zweigrohr (ATSL) mit einem ersten Ende, das in die Umgebungsluft geöffnet ist, und mit einem zweiten Ende, das einlassseitig wenigstens der SCR mit dem Abgaskrümmer verbunden ist, und
- ein Gebläse (B), das an dem Zweigrohr angeordnet ist,
- ein Umschaltventil (V), das an dem zweiten Ende angeordnet ist,
wobei das Verfahren das Steuern des Umschaltventils zum Sperren des Zweigrohrs (ATSL) vor der Detektion des Abschaltbefehls umfasst und dann, wenn der Abschaltbefehl detektiert wird (i), Folgendes umfasst:
- Abschalten (ii) der Kraftmaschine,
- Schalten (iiid) des Umschaltventils zum Verbinden des Zweigrohrs mit dem Auspuffkrümmer,
- Steuern des Dosiermoduls gemäß dem Ziel und
- Aktivieren (iiic) des Gebläses.

9. Verfahren nach einem der vorhergehenden Ansprüche, das das ununterbrochene Überwachen einer ATS-Temperatur zum Unterbrechen oder Verhindern der obigen NH3-Speicherungs-Erhöhungsprozedur, wenn eine restliche ATS-Wärme nicht ausreicht, um eine Harnstoffmittel-Hydrolisierungsheizung bereitzustellen, umfasst.

10. Verfahren nach Anspruch 9, wenn abhängig von einem der Ansprüche 3 bis 5, wobei außerdem die Kraftmaschinenwassertemperatur ununterbrochen überwacht wird, um die obige NH3-Speicherungserhöhung zu unterbrechen oder zu verhindern.

11. Brennkraftmaschine, die einen Abgaskrümmer und ein mit dem Abgaskrümmer verbundenes ATS (Nachbehandlungssystem) umfasst, wobei das ATS eine SCR (selektive katalytische Reduktion) und eine Steuereinheit, die zum Steuern einer SCR-NH3-Speicherung angeordnet ist, umfasst, wobei die Steuereinheit dafür programmiert ist, das Verfahren nach einem der vorhergehenden Ansprüche 1-10 auszuführen.

12. Fahrzeug, das mit einer Brennkraftmaschine nach Anspruch 11 versehen ist.

## Revendications

1. Procédé de gestion d'une réduction catalytique sélective, RCS, active d'un système de post-traitement, ATS, dans lequel l'ATS est connecté à un collecteur d'échappement (EP) d'un moteur à combustion interne (E), le procédé comprenant l'étape d'augmentation d'un stockage de NH3 (iii) lorsqu'une instruction d'arrêt du moteur est détectée (i), de sorte que ledit stockage de NH3 augmenté soit prêt pour un démarrage à froid ultérieur du moteur ; le procédé comprenant en outre un arrêt du moteur, lorsque ladite instruction d'arrêt est détectée ; **caractérisé en ce que**, lorsque le moteur est arrêté, un module de dosage d'agent réducteur est activé ou maintenu actif de manière à atteindre une cible dudit stockage de NH3.

2. Procédé selon la revendication 1, dans lequel ledit stockage de NH3 RCS est limité avant ladite détection d'instruction d'arrêt par rapport à un stockage de NH3 nominal afin d'éviter un glissement de NH3 pendant une accélération du moteur, et dans lequel ladite augmentation de stockage de NH3 utilise comme cible un stockage de NH3 modifié supérieur audit stockage limité et inférieur/égal audit stockage nominal.

3. Procédé selon la revendication 1 ou 2, dans lequel ledit moteur à combustion interne est pourvu d'un compresseur (C) électrique agencé sur une conduite d'admission (IP) du moteur à combustion interne, pour suralimenter ce dernier, des moyens de RGE (recyclage des gaz d'échappement) à haute pression, adaptés pour faire circuler les gaz d'échappement, lorsque le moteur est allumé, de la conduite d'échappement à la conduite d'admission, ayant une entrée agencée entre ledit compresseur et l'admission du moteur, le procédé comprenant, après l'arrêt du moteur :
- un module de dosage commandé selon ladite cible
- l'ouverture (iiib) desdits moyens RGE
- l'activation (iiic) dudit compresseur électrique afin de faire circuler de l'air frais de la conduite d'admission à l'ATS, en contournant ledit moteur à combustion interne.

4. Procédé selon la revendication 3, dans lequel ledit compresseur (C) est connecté mécaniquement à une turbine (T) agencée sur ladite conduite d'échappement (EP), en aval desdits moyens RGE et en amont dudit ATS et dans lequel ledit compresseur électrique et ladite turbine définissent un turbocompresseur électrique de suralimentation.

5. Procédé selon la revendication 1 ou 2, dans lequel ledit moteur à combustion interne est pourvu d'une turbine de puissance électrique agencée sur la conduite d'échappement (EP) du moteur à combustion interne, pour extraire l'énergie électrique des gaz d'échappement, des moyens de RGE à haute pression adaptés pour faire circuler les gaz d'échappement, lorsque le moteur est allumé, de la conduite d'échappement à la conduite d'admission, ayant une entrée agencée entre ledit collecteur d'échappement de moteur et ladite turbine de puissance, le procédé comprenant, après l'arrêt du moteur :
- un module de dosage commandé selon ladite cible
- l'ouverture (iiib) desdits moyens RGE
- l'activation (iiic) de ladite turbine de puissance électrique afin de faire circuler de l'air frais de la conduite d'admission à l'ATS, en contournant ledit moteur à combustion interne.

6. Procédé selon la revendication 1 ou 2, dans lequel ledit ATS est pourvu de
- un tuyau de circulation (ATSL) connectant un premier point en amont et un deuxième point en aval de ladite RCS,
- une soupape de dérivation (V) agencée au niveau dudit deuxième point, adaptée pour définir une boucle fermée comportant au moins ladite RCS,
- une soufflante (B) électrique agencée sur le tuyau de circulation (ATSL),
le procédé comprenant la commande de ladite soupape de dérivation pour bloquer ledit tuyau de circulation (ATSL) avant la détection de ladite instruction d'arrêt et, lorsque ladite instruction d'arrêt est détectée (i), comprenant
- l'arrêt du moteur (ii),
- la commutation (iiid) de ladite soupape de dérivation pour définir ladite boucle fermée,
- un module de dosage commandé selon ladite cible,
- l'activation (iiic) de ladite soufflante.

7. Procédé selon la revendication 1 ou 2, dans lequel ledit moteur à combustion interne comprend une turbine (T), connectée fonctionnellement à un moteur électrique (MG) agencé sur ladite conduite d'échappement entre ledit moteur à combustion interne et ledit ATS, et dans lequel l'ATS est pourvu de
- un tuyau de circulation (ATSL) connectant un premier point entre ledit moteur à combustion interne et ladite turbine et un deuxième point en aval de ladite RCS,
- une soupape de dérivation (V) agencée au niveau dudit deuxième point, adaptée pour définir une boucle fermée comportant au moins ladite RCS et ladite turbine,
le procédé comprenant la commande de ladite soupape de dérivation pour bloquer ledit tuyau de circulation (ATSL) avant la détection de ladite instruction d'arrêt et, lorsque ladite instruction d'arrêt est détectée (i), comprenant
- l'arrêt du moteur (ii),
- la commutation (iiid) de ladite soupape de dérivation pour définir ladite boucle fermée,
- un module de dosage commandé selon ladite cible et
- l'activation (iiic) de ladite turbine.

8. Procédé selon la revendication 1 ou 2, dans lequel ledit moteur à combustion interne comprend
- un tuyau de branchement (ATSL) ayant une première ouverture d'extrémité dans l'air ambiant et une deuxième extrémité connectée au collecteur d'échappement, en amont d'au moins l'une parmi ladite RCS et
- une soufflante (B) agencée sur ledit tuyau de branchement,
- une soupape de dérivation (V) agencée au niveau de ladite deuxième extrémité,
le procédé comprenant la commande de ladite soupape de dérivation pour bloquer ledit tuyau de branchement (ATSL) avant la détection de ladite instruction d'arrêt et, lorsque ladite instruction d'arrêt est détectée (i), comprenant
- l'arrêt du moteur (ii),
- la commutation (iiid) de ladite soupape de dérivation pour connecter ledit tuyau de branchement audit collecteur d'échappement,
- un module de dosage commandé selon ladite cible et
- l'activation (iiic) de ladite soufflante.

9. Procédé selon l'une quelconque des revendications précédentes, comprenant la surveillance en permanence d'une température de l'ATS pour interrompre ou inhiber la procédure d'augmentation du stockage de NH3 ci-dessus lorsqu'une chaleur résiduelle de l'ATS n'est pas suffisante pour assurer un chauffage d'hydrolyse de l'agent d'urée.

10. Procédé selon la revendication 9, lorsqu'elle dépend de l'une quelconque des revendications 3 à 5, dans lequel la température de l'eau du moteur est également surveillée en permanence pour interrompre ou inhiber l'augmentation du stockage de NH3 ci-dessus.

11. Moteur à combustion interne comprenant un collecteur d'échappement et un ATS (système de post-traitement) connecté audit collecteur d'échappement, dans lequel l'ATS comprend une RCS (réduction catalytique sélective) et une unité de commande agencée pour commander un stockage de NH3 RCS, dans lequel ladite unité de commande est programmée pour exécuter le procédé de l'une quelconque des revendications précédentes 1 à 10.

12. Véhicule pourvu d'un moteur à combustion interne selon la revendication 11.
